(19) Europäisches Patentamt
European Patent Office
Office européen des brevets

(11) **EP 3 772 013 A1**

(12) **EUROPEAN PATENT APPLICATION**

(43) Date of publication:
   **03.02.2021 Bulletin 2021/05**

(51) Int Cl.:
   ***G06K 9/00*** *(2006.01)*

(21) Application number: **19188891.6**

(22) Date of filing: **29.07.2019**

(84) Designated Contracting States:
   **AL AT BE BG CH CY CZ DE DK EE ES FI FR GB GR HR HU IE IS IT LI LT LU LV MC MK MT NL NO PL PT RO RS SE SI SK SM TR**
   Designated Extension States:
   **BA ME**
   Designated Validation States:
   **KH MA MD TN**

(71) Applicant: **TripEye Limited**
   **London**
   **SE26 5BN (GB)**

(72) Inventor: **Thompson, Tamlyn**
   **London, SE26 5BN (GB)**

(74) Representative: **Armstrong, Rosemary**
   **Armstrong IPR Limited**
   **Innovation Centre**
   **NI Science Park**
   **Queens Road**
   **Belfast, BT3 9DT (GB)**

(54) **IDENTITY DOCUMENT VALIDATION METHOD, SYSTEM AND COMPUTER PROGRAM**

(57)   A method of validating an identity document issued by an issuing authority to certify the identity of an identity document holder whose details are displayed by the identity document together with a first image of the identity document holder, wherein the method comprises the steps of

allowing the issuing authority to capture a second image of the identity document holder substantially at the same time as the identity document holder applied for the identity document;

allowing an operator to define a value of a threshold for assessing the similarity of a pair of images;

receiving an image of the identity document;

processing the image of the identity document to extract therefrom the first image and details of the identity document holder and the issuing authority;

using the extracted details of the identity document holder or an identification number of the identity document to retrieve from the issuing authority the second image of the identity document holder;

receiving from a candidate client a third image comprising an image of themselves

organising the first image, second image and third image into a plurality of pairs;

calculating for each pair a measure of the similarity of the images contained therein

deeming the identity document validated in the event each measure of similarity for each pair exceeds the value of the threshold

characterised in that the step of calculating for each pair a measure of the similarity of the images contained therein comprises the step of applying a plurality of face recognition algorithms to each image in the pair and calculating an accumulated score therefrom representing the degree of matching between the faces of the persons displayed in each image.

FIGURE 3

**Description**

Field of the Invention

The present invention relates to a method, system and computer program for validating an identity document from a plurality of facial representations of the identity document holder.

Background of the Invention

The UK Home Office Identity Fraud Steering Committee defines identity fraud as "when a false identity or someone else's identity details are used to support unlawful activity, or when someone avoids obligation/liability by falsely claiming that he/she was the victim of identity fraud" (National Fraud Authority, Fraud Typologies and Victims of Fraud - Literature Review 2009). In December 2012 the National Fraud Authority suggested that identity fraud cost UK adults approximately £3.3 billion each year (National Fraud Authority, Annual Fraud Indicator 2013). However, this does not include any losses suffered by the public, private or charity sectors. Therefore, the full cost to the UK from identity fraud each year is likely to be considerably higher. Similarly, a National Crime Victimization Survey conducted in the US found that individual financial losses due to personal identity theft totalled $24.7 billion, over $10 billion more than the losses attributed to all other property crimes measured in the survey (Victims of Identity Theft 2012).

Identity crimes are one of the fastest growing types of fraud in the UK. The UK's Fraud prevention service found that identity Fraud (using either stolen or fictitious identities) was the most commonly recorded type of fraud in 2014 and accounted for over 41 % of all frauds identified. Increases in the number of pieces of information that a fraudster now needs to be able to gain access to someone else's account (particularly a bank account or credit card account) have made it more difficult for fraudsters to take over existing accounts. As a result, fraudsters are increasingly focussing on using other people's identities to open new accounts. Indeed, the greatest increase in Identity Frauds, in terms of both the number of cases (23,686 cases in 2014 compared with 12,544 in 2013) and as a percentage (+89%), was where a fictitious or stolen identity was used to obtain bank accounts. (CIFAS Fraudscape: UK Fraud Trends Report 2014).

Efficient and effective identity verification techniques are key to reducing this crime. Automated systems for identity verification and matching are known. For example, US Patent No US 8,322,605 describes an identity matching system which enables an operator to determine the status of an individual based on identification information contained on an identification records provided by the individual and environmental information such as threat levels issued by the military or the Department of Homeland Security. Similarly, US7110573 describes an apparatus for automatically identifying and validating identity documents, for validating the identity of the bearer of the document; and verifying that the bearer has authorization to participate in an activity represented by the document. These prior art systems are limited insofar as they perform identity validation based on features contained in presented identity documents only. However, these documents and associated features can be readily altered or forged by fraudsters.

Summary of the Invention

According to a first aspect of the invention there is provided a method of validating an identity document issued by an issuing authority to certify the identity of an identity document holder whose details are displayed by the identity document together with a first image of the identity document holder, wherein the method comprises the steps of

allowing the issuing authority to capture a second image of the identity document holder substantially at the same time as the identity document holder applied for the identity document;
allowing an operator to define a value of a threshold for assessing the similarity of a pair of images;
receiving an image of the identity document;
processing the image of the identity document to extract therefrom the first image and details of the identity document holder and the issuing authority;
using the extracted details of the identity document holder or an identification number of the identity document to retrieve from the issuing authority the second image of the identity document holder;
receiving from a candidate client a third image comprising an image of themselves
organising the first image, second image and third image into a plurality of pairs;
calculating for each pair a measure of the similarity of the images contained therein
deeming the identity document validated in the event each measure of similarity for each pair exceeds the value of the threshold
characterised in that the step of calculating for each pair a measure of the similarity of the images contained therein comprises the step of applying a plurality of face recognition algorithms to each image in the pair and calculating an accumulated score therefrom representing the degree of matching between the faces of the persons displayed in each image.

Preferably, the step of processing the image of the identity document to extract therefrom the first image and details of the identity document holder and the issuing authority comprises the step of interrogating a biochip, if present, in the identity document; and retrieving from the biochip a fourth image of the identity document holder; and the step of organising the first image, second image and third image into a plurality of pairs comprises the step of organising the first image, second image, third image and fourth images into a plurality of pairs.

Preferably, the step of deeming the identity document validated in the event each measure of similarity for each pair exceeds the value of the threshold is followed by the step of submitting for manual inspection the images in a pair, in the event the measure of similarity for the pair is less than the value of the threshold.

Desirably, the step of submitting for manual inspection the images in a pair, in the event the measure of similarity for the pair is less than the value of the threshold comprises the step of displaying together to an operator the faces of the person displayed in each image of the pair; and allowing the operator to provide a determination as to whether the faces match; and the step of deeming the identity document validated in the event each measure of similarity for each pair exceeds the value of the threshold comprises the step of deeming the identity document validated in the event each measure of similarity for each pair exceeds the value of the threshold or the faces displayed in the pairs submitted for manual inspection are determined by the operator to be matching.

Desirably, the step of applying a plurality of face recognition algorithms to each image in the pair and calculating an accumulated score therefrom representing the degree of matching between the faces of the persons displayed in each image comprises the steps of

applying the face recognition algorithms to each image in the pair to generate a plurality of outputs of the face recognition algorithms; applying differential weights to the outputs of the face recognition algorithms to create a plurality of weighted outputs of the face recognition algorithms; normalising the weighted outputs of the face recognition algorithms to create a plurality of normalised weighted outputs; and calculating the sum of the normalised weighted outputs to generate the accumulated score.

According to a second aspect of the invention there is provided an identity document validation system adapted to validate an identity document issued by an issuing authority to certify the identity of an identity document holder whose details are displayed by the identity document together with a first image of the identity document holder, wherein the identity document validation system comprises

an identity document processing unit adapted in use to receive a captured image of the identity document and extract therefrom the image, the first image and the details of the identity document holder and the issuing authority; a primary cross validation unit coupled with the identity document processing unit to receive therefrom the first image, and is adapted in use to receive from the issuing authority, a second image of the identity document holder captured by the issuing authority substantially at the same time as the identity document holder applied for the identity document; and from a candidate client, a third image comprising an image of themselves; wherein the primary cross validation unit comprises a plurality of face recognition engine blocks which are adapted in use to organise the first image, second image and third image into a plurality of pairs; and calculate for each pair a measure of the similarity of the images contained therein; and the primary cross validation unit is further adapted is use to deem the identity document validated in the event each measure of similarity for each pair exceeds the value of the threshold

characterised in that each face recognition engine block comprises a plurality of face recognition engines adapted in use to be applied to each image in a pair and calculate an accumulated score therefrom representing the degree of matching between the faces of the persons displayed in each image.

Preferably, the identity document processing unit further comprises a biochip interrogation unit adapted in use to interrogate from a biochip if present in the identity document, and retrieve from the biochip a fourth image of the identity document holder; and an internal consistency checking unit coupled with the biochip interrogation unit to receive therefrom the fourth image; and comprises a plurality of face recognition engines, adapted in use to be applied to first image and the second image and calculate an accumulated score representing the degree of matching between the faces of the persons displayed in each image; and wherein the internal consistency checking unit is further coupled with the primary cross validation unit and is adapted in use to deactivate the primary cross validation unit in the event the accumulated score is less than the threshold.

Preferably, the identity document processing unit further comprises a biochip interrogation unit interface coupled with an internal consistency checking unit, wherein the biochip interrogation unit interface is adapted in use permit the transmission to the internal consistency checking unit 16, of a fourth image of the identity document holder retrieved from a biochip if present in the identity document, and wherein the internal consistency checking unit comprises a plurality of face recognition engines, adapted in use to be applied to first image and the fourth image and calculate an accumulated score representing the degree of matching between the faces of the persons displayed in each image; and wherein the internal consistency checking unit is further coupled with the primary cross validation unit and is adapted in use to deactivate the primary cross validation unit in the event the accumulated score is less than the threshold.

Preferably, the internal consistency checking unit is coupled with an eyeball unit adapted in use to display to an operator the faces of the persons displayed in the first image and the fourth images; and to allow the operator to provide a determination as to whether the faces match; wherein the eyeball unit is coupled with the primary cross validation unit and is adapted in use to deactivate the primary cross validation unit in the event the operator provides the determination that the faces do not match.

Preferably, the primary cross validation unit comprises a plurality of eyeball units coupled with the face recognition blocks which are adapted in use to submit for manual inspection the images in a pair, in the event the measure of similarity for the pair is less than the value of the threshold.

Desirably, each eyeball unit is adapted in use to display to an operator the face of the person displayed in the first image and the faces of the persons displayed in the pair; and to allow the operator to provide a determination as to whether the faces match; and the primary cross validation unit is further adapted is use to deem the identity document validated in the event each measure of similarity for each pair exceeds the value of the threshold or the operator provides a determination that the faces displayed in the pairs submitted for manual inspection match.

Desirably, the face recognition blocks each comprise a plurality of face recognition engines, adapted in use to be applied to each image in the pairs into which the first image, second image and third image are organised; and a plurality of weighting units coupled to the face recognition engines to apply differential weights to the outputs therefrom; wherein the weighting units are coupled with a summing unit to adapted in use to normalise the weighted outputs from the face recognition engines and to calculate a sum thereof to generate the accumulated score.

Description and Drawings

An embodiment of the invention is herein described by way of example only with reference to the accompanying drawings in which:

Figure 1 is a block diagram of the identity document cross-validation system in accordance with the second aspect of the invention

Figure 2 is a block diagram of a face recognition block employed in the identity document cross-validation system of Figure 1; and

Figure 3 is a flow chart of the identity document cross-validation method in accordance with the first aspect of the invention.

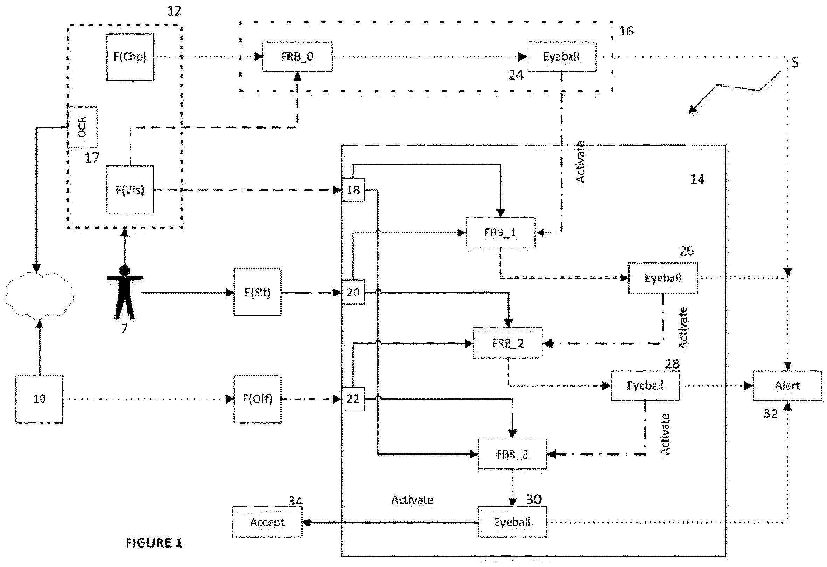

Referring to Figure 1, while certain specific features are illustrated, those skilled in the art will appreciate from the present disclosure that various other features have not been illustrated for the sake of brevity and so as not to obscure more pertinent aspects of the implementations disclosed herein.

For the sake of clarity, the term "identity" will be used henceforth to mean a collection of attributes that uniquely define a person (the fact of being what a person is). Similarly, the term "identity document" will be used henceforth to mean documentation provided by a person to support their claim to a specified identity. More specifically, the term identity document refers to documentation issued by a national or federal authority (e.g. security forces, intelligence agencies, border control etc) which certifies the identity of the person to whom the identity document is issued. The skilled person will understand that the preferred embodiment is not limited to the above-mentioned issuing bodies. In particular, the preferred embodiment is operable with documentation issued by any national or federal body, wherein the documentation serves the purpose of certifying the identity of the person to whom the document is issued.

For brevity, the person to whom an identity document is issued will be referred to henceforth as the "identity document holder". Similarly, the body which issued the identity document will be referred to henceforth as the "issuing authority" of the identity document. For the avoidance of doubt, an identity document will be understood to comprise a pictorial representation (i.e. a photo or digital image) of the face of the identity document holder, to support facial recognition of that person. To this end, the term "face" will be used henceforth to refer to a human face. For brevity, the pictorial representation of the face of the identity document holder contained in the identity document will be referred to henceforth as the "ID facial photo". Furthermore, the term "selfie" will be used henceforth to refer to a self-portrait photograph, typically, but not exclusively, taken with a digital camera or camera phone held in the hand or supported by a selfie stick.

In addition, an identity document typically comprises a number of visible features which may be used to assess the authenticity of the identity document. These features may include without limitation the, name/surname of the identity document holder, a date of birth of the identity document holder, a signature of the identity document holder, an issue date of the identity document, an expiry date of the identity document, details of the issuing authority, a stamp of the issuing authority, an identity document reference number; and security features such as security patterns, specialist printing fonts etc. For brevity, the term "personal detail element" will be used henceforth to refer to a piece of information (e.g. date of birth) which when combined with other personal data elements may be used to identify or prove the identity of a person.

For completeness, the term identity document will also be understood to embrace e-IDs. An "e-ID" is a machine-readable identity document containing a contactless integrated circuit (IC) chip within which is stored data from the identity document, a biometric measure of the identity document holder and a security object to protect the data. For the sake of brevity, the contactless integrated circuit (IC) chip in an e-ID will be referred to henceforth as a "biochip".

*Identity Document Cross-Validation System*

The identity document cross-validation system 5 may comprise an identity document processing unit 12 and a primary cross-validation unit 14. The identity document cross-validation system 5 may also optionally comprise an internal consistency checking unit 16.

The identity document processing unit 12 may comprise an interface to an image capture device adapted to capture of a graphical representation (henceforth known as an image) of an identity document (not shown) presented by a candidate client 7. The image capture device (not shown) which may comprise a camera, scanner or webcam. However, the skilled person will understand that the preferred embodiment is not limited to these above-mentioned image capture devices. Instead, the preferred embodiment is operable with any device capable of capturing an image of a presented identity document. More particularly, the image capture device may comprise a candidate client's mobile telephone or computing device; and the interface to the identity document processing unit 12 is adapted to provide a mechanism for operably coupling the identity document processing unit 12 to the image capture device. The identity document processing unit 12 may also comprise an interface to a biochip interrogation unit (not shown), wherein the biochip interrogation unit may form a component of the candidate client's mobile telephone or computing device; or may be a standalone biochip reading device. The interface to the biochip interrogation unit is adapted to provide a mechanism for operably coupling the identity document processing unit 12 to the biochip reading device. The identity document processing unit 12 may further comprise an optical character recognition (OCR) unit 17.

In use, the interface to the image capture device is adapted to permit the transmission of a graphical representation (henceforth known as an image) of an identity document (not shown) presented by a candidate client 7 to the identity document processing unit 12. Similarly, in use, the identity document processing unit 12 is adapted to detect in the image, an ID facial photo F(Vis) of the identity document holder. The identity document processing unit 12 is further adapted to crop and extract an image of the ID facial photo from the captured image of the identity document. For brevity, the image of the ID facial photo extracted from the captured image of the identity document will be referred to henceforth as the visible face image F(Vis). The identity document processing unit 12 is adapted to transmit the visible face image F(Vis) to the primary cross-validation unit 14 and the internal consistency checking unit 16.

The identity document processing unit 12 is further adapted to activate the OCR unit 17 to process textual elements in the image of the identity document, and extract data therefrom including but not limited to (a) the identity document number; (b) the issuing authority of the identity document; and (c) personal detail elements of the identity document holder.

The identity document processing unit 12 is further adapted to

- transmit this data to the issuing authority 10 of the identity document; and
- issue a request to the issuing authority 10 for a photo of the identity document holder, captured by the issuing authority 10 when the identity document holder applied for the identity document.

For brevity, the photo captured by the issuing authority 10 of the identity document holder will be referred to henceforth as the office face image F(Off).

In use, the interface to a biochip interrogation unit (if present) is adapted to transmit to the identity document processing unit 12 information retrieved from a biochip (not shown) if present in the identity document (i.e. if the identity document is an e-ID). In particular, if the identity document comprises a biochip, the identity document processing unit 12 is adapted to activate the interface to a biochip interrogation unit to transmit to the identity document processing unit 12 the photograph of the identity document holder retrieved from the biochip. For brevity, this photograph will be referred to henceforth as the chip face image F(Chp). The interface to the biochip interrogation unit is further adapted to transmit the chip face image F(Chp) to the internal consistency checking unit 16.

The primary cross-validation unit 14 comprises a plurality of receiver units 18, 20, 22. The first receiver unit 18 is adapted in use to receive the visible face image F(Vis). The second receiver unit 20 is adapted in use to receive a selfie of the face of the candidate client 7. For brevity, this image will be referred to henceforth as the selfie face image F(Slf). The third receiver unit 22 is adapted to receive from the issuing authority 10 of the identity document, the office face image F(Off) of the identity document holder.

The primary cross-validation unit 14 further comprises a plurality of face recognition engine blocks FRB_1, FRB_2, and FRB-3. The face recognition engine blocks FRB_1, FRB_2, and FRB-3 are operably coupled with the receivers 18, 20 and 22. In particular, the first face recognition engine block FRB_1 is adapted in use to receive

    (a) the visible face image F(Vis) from the first receiver 18; and
    (b) the selfie face image F(Slf) from the second receiver 20.

Similarly, the second face recognition engine block FRB_2 is adapted in use to receive

(a) the selfie face image F(Slf) from the second receiver 20; and
(b) the office face image F(Off) from the third receiver 22.

Furthermore, the third face recognition engine block FRB_3 is adapted in use to receive

(a) the visible face image F(Vis) from the first receiver 18; and
(b) the office face image F(Off) from the third receiver 22.

The skilled person will understand that the preferred embodiment is not dependent on the above coupling arrangement of face recognition engine blocks and receiver units. In particular, the preferred embodiment is operable with any combination and permutation of the receiver units and corresponding face images.

In a similar manner, the internal consistency checking unit 16 comprises a face recognition engine block FRB_0 which is adapted in use to receive the visible face image F(Vis) and the chip face image F(Chp) from the identity document processing unit 12 and the biochip interrogation unit respectively.

It will be understood by the person skilled in the art that the face recognition blocks FRB_0, FRB_1, FRB_2, and FRB-3 may alternatively be configured to receive a compressed representation of the the visible face image F(Vis), the selfie face image F(Slf), the office face image F(Off) and the chip face image F(Chp). This configuration will reduce communication delays incurred in transmitting the large quantities of data typically contained in facial images. However, any such reduction in transmission delays will be at least partially offset by the increased computational load involved in compressing and decompressing the facial images before and after transmission to the relevant face recognition blocks FRB_0, FRB_1, FRB_2, and FRB-3.

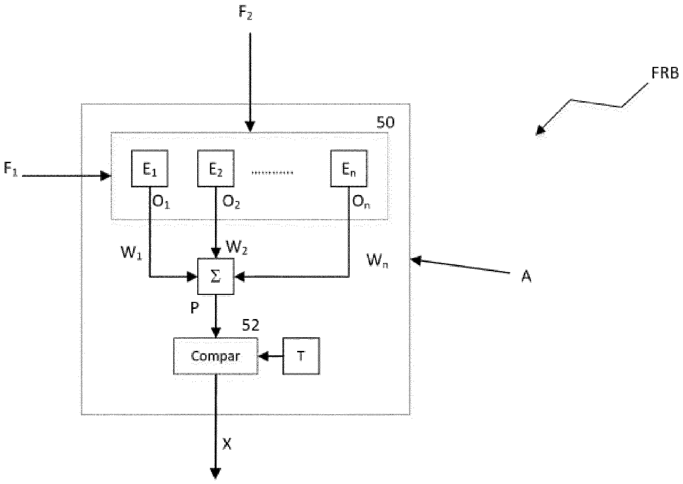

Referring to Figure 2, a face recognition engine block FRB is adapted to receive two face images F1 and F2; and an activation signal A. For example, in the case of the face recognition engine block FRB_0 in the internal consistency checking unit 16 of Figure 1, the two face images (F1 and F2) are chip face image F(Chp) and the visible face image F(Vis) respectively. Similarly, in the case of the first face recognition engine block FRB_1 in the primary cross-validation unit 14 in Figure 1, the two face images (F1 and F2) are the visible face image F(Vis) and the selfie face image F(Slf) respectively. The activation signal A serves to activate the face recognition engine block FRB and will be discussed in more detail later in the description.

The face recognition engine block FRB comprises:

- an engine block 50 which in turn comprises a plurality of face recognition engines $E_1$, $E_2$.... $E_n$ adapted to operate in sequence or in parallel;
- a summing unit $\Sigma$ which is operably coupled with each of the face recognition engines $E_1$, $E_2$.... $E_n$; and
- a comparator 52 which is operably coupled with the summing unit $\Sigma$ and is further provided with a predefined threshold value T.

On receipt of the activation signal A, a face recognition engine block FRB is adapted to be activated and to thereby activate the face recognition engines $E_1$, $E_2$.... $E_n$, the summing unit $\Sigma$ and the comparator 52.

Each face recognition engine $E_i$ (i= 1 to n) is adapted in use to implement a face recognition algorithm to compare the two face images F1 and F2 and produce an output $O_i$ (i=1 to n) indicating the degree to which the faces in the face images match. In a preferred embodiment, the face recognition engines $E_1$, $E_2$.... $E_n$ may comprise third party facial recognition software tools, including without limitation, the Open Source Computer Vision (OpenCV) face recognition tool, ReKognition (trade mark) Face Recognize (trade mark) tool, Verilook (trade mark) SDK, the Lambda labs (trade mark) Face Recognition Application Programming Interface (API) Picasa (trade mark), Face++ (trade mark) face recognition API, and NEC's NeoFace (trade mark) match tool. However, the person skilled in the art will recognize that the preferred embodiment should in no way be construed as being limited to the use of the above-mentioned face recognition tools. Indeed, these face recognition tools are mentioned for example only. The preferred embodiment is operable with any other face recognition engine as required by the user, including face recognition engines yet to be developed. The person skilled in the art will further recognize that the preferred embodiment is not limited to the above-mentioned output metric from the face recognition engines. In particular, the face recognition engines may also produce an output which provides an indication of the degree of confidence of the degree of matching of the two face images F1 and F2.

The summing unit $\Sigma$ is adapted in use to receive and process the accumulated outputs $O_i$ (i =1 to n) of the face recognition engines $E_1$, $E_2$... $E_n$. By accumulating the results of the multiple face recognition engines $E_1$, $E_2$... $E_n$, the preferred embodiment provides more robust identity matching decisions. To this end, the summing unit $\Sigma$ may apply differential weights ($W_i$) to the outputs $O_i$ (i =1 to n) of each face recognition engine $E_1$, $E_2$... $E_n$. For example, the summing unit $\Sigma$ may weight an output according to the confidence (if available) given to the degree of matching between the two face images F1 and F2 provided by a relevant face recognition engine.

The summing unit $\Sigma$ is further adapted in use to normalise the weighted outputs ($\alpha_i W_i O_i$) and calculate the sum of the normalised weighted outputs. For brevity, the sum of the normalised weighted outputs will be referred to henceforth as the summing unit output (P).

$$P = \sum_{i=1}^{n} \alpha_i W_i O_i$$

The summing unit $\Sigma$ is adapted, in use, to transmit the summing unit output (P) to the comparator 52.

The person skilled in the art will understand that the above operations are provided for illustration purposes only; and in no way should be construed as limiting the preferred embodiment to these process operations. In particular, the summing unit $\Sigma$ may implement a variety of other operations on the accumulated outputs $O_i(i=1$ to n) of the face recognition engines $E_1$, $E_2$... $E_n$ dependent on the specific nature and content of the outputs $O_i(i=1$ to n) of the face recognition engines $E_1$, $E_2$... $E_n$.

The comparator 52 is adapted in use to receive the summing unit output (P) and to compare it against the pre-defined threshold value T. Based on the results of the comparison, the comparator 52 is adapted in use to produce an output which will also be the overall output from the relevant face recognition block. Thus, the output of the comparator 52 will be referred to henceforth as an FRB output X. Thus, for ease of understanding, the output of the comparator 52 in the face recognition block FRB_0 in the internal consistency checking unit 16 will be designated as $X_0$. Similarly, the output of the comparator 52 in the face recognition blocks FRB_1, FRB_2 and FRB_3 in the primary cross validation unit 14 will be respectively designated as $X_1$, $X_2$ and $X_3$.

For example, in the event the summing unit output (P) is determined by the comparator 52 to be less than the pre-defined threshold value T, the FRB output X may be zero. Similarly, in the event the summing unit output (P) is determined by the comparator 52 to exceed the pre-defined threshold value T, the FRB output X may be one. The person skilled in the art will understand that the preferred embodiment is in no way limited to these specific FRB values. The above operations are provided for illustrative purposes only. In particular, preferred embodiment is operable with any FRB output value or configuration as required. For example, rather than the above binary output values, the FRB value may be a continuously valued variable reflecting the degree of closeness between the summing unit output (P) and the pre-defined threshold value T.

Returning to Figure 1, the identity document cross-validation system 5 is adapted so that an activation signal A (not shown) is substantially continuously and substantially activated and transmitted to the face recognition block FRB_0 in the internal consistency checking unit 16. Similarly, the face recognition block FRB_0 in the internal consistency checking unit 16 is operably coupled to an eyeball unit 24, so that the face recognition block FRB_0 is adapted in use to transmit its output $X_0$ to the eyeball unit 24. The eyeball unit 24 is adapted in turn to receive the FRB output $X_0$. In the event the output $X_0$ indicates that the chip face image F(Chp) and the visible face image F(Vis) match, the eyeball unit 24 is adapted to transmit an activation signal A to the face recognition block FRB_1 in the primary cross validation unit 14. However, in the event the output $X_0$ indicates that the chip face image F(Chp) and the visible face image F(Vis) do not match within the tolerance established by the pre-defined threshold value T of internal consistency checking unit 16, the eyeball unit 24 is adapted in use to display the faces shown in the chip face image F(Chp) and the visible face image F(Vis) to an operator (not shown); and to allow the operator (not shown) to provide a determination as to whether the faces match. In the event the operator (not shown) overrides the output from the face recognition block FRB_0 and provides the determination that the chip face image F(Chp) and the visible face image F(Vis) match, the eyeball unit 24 is adapted to transmit an activation signal A to the face recognition block FRB_1 in the primary cross validation unit 14. In the event the operator (not shown) agrees with the output from the face recognition block FRB_0 and provides the determination that the chip face image F(Chp) and the visible face image F(Vis) do not match, the eyeball unit 24 is adapted to activate an alert module 32.

In the event

(a) the presented identity document does not comprise a biochip (i.e. the identity document is not an eID); or
(b) the identity document cross-validation system 5 does not comprise a biochip interrogation unit or an internal consistency checking unit 16

the identity document cross-validation system 5 is adapted so that an activation signal A is substantially continuously and substantially activated and transmitted to the face recognition block FRB_1 in the primary cross validation unit 14.

Similarly, the face recognition block FRB_1 in the primary cross-validation unit 14 is operably coupled to an eyeball unit 26, so that the face recognition block FRB_1 is adapted in use to transmit its output $X_1$ to the eyeball unit 26. The eyeball unit 26 is adapted in turn to receive the FRB output $X_1$. In the event the output $X_1$ indicates that the visible face image F(Vis) and the selfie face image F(Slf) match, the eyeball unit 26 is adapted to transmit an activation signal A to the face recognition block FRB_2 in the primary cross validation unit 14. However, in the event the output $X_1$ indicates that the visible face image F(Vis) and the selfie face image F(Slf) do not match within the tolerance established by the pre-defined threshold value T of internal consistency checking unit FRB_1, the eyeball unit 26 is adapted in use to display the faces shown in the visible face image F(Vis) and the selfie face image F(Slf) to an operator (not shown); and to allow the operator (not shown) to provide a determination as to whether the faces match. In the event the operator (not shown) overrides the output from the face recognition block FRB_1 and provides the determination that the visible face image F(Vis) and the selfie face image F(Slf) match, the eyeball unit 26 is adapted to transmit an activation signal A to the face recognition block FRB_2 in the primary cross validation unit 14. In the event the operator (not shown) agrees with the output from the face recognition block FRB_1 and provides the determination that the visible face image F(Vis) and the selfie face image F(Slf) do not match, the eyeball unit 26 is adapted to activate an alert module 32.

Similarly, the face recognition block FRB_2 in the primary cross-validation unit 14 is operably coupled to an eyeball unit 28, so that the face recognition block FRB_2 is adapted in use to transmit its output $X_2$ to the eyeball unit 28. The eyeball unit 28 is adapted in turn to receive the FRB output $X_2$. In the event the output $X_2$ indicates that the selfie face image F(Slf) and the office face image F(Off) match, the eyeball unit 28 is adapted to transmit an activation signal A to the face recognition block FRB_3 in the primary cross validation unit 14. However, in the event the output $X_2$ indicates that the selfie face image F(Slf) and the office face image F(Off) do not match within the tolerance established by the pre-defined threshold value T of internal consistency checking unit FRB_2, the eyeball unit 28 is adapted in use to display the faces shown in the selfie face image F(Slf) and the office face image F(Off) to an operator (not shown); and to allow the operator (not shown) to provide a determination as to whether the faces match. In the event the operator (not shown) overrides the output from the face recognition block FRB_2 and provides the determination that the selfie face image F(Slf) and the office face image F(Off) match, the eyeball unit 28 is adapted to transmit an activation signal A to the face recognition block FRB_3 in the primary cross validation unit 14. In the event the operator (not shown) agrees with the output from the face recognition block FRB_2 and provides the determination that the selfie face image F(Slf) and the office face image F(Off) do not match, the eyeball unit 28 is adapted to activate an alert module 32.

Similarly, the face recognition block FRB_3 in the primary cross-validation unit 14 is operably coupled to an eyeball unit 30, so that the face recognition block FRB_3 is adapted in use to transmit its output $X_3$ to the eyeball unit 30. The eyeball unit 30 is adapted in turn to receive the FRB output $X_3$. In the event the output $X_3$ indicates that the office face image F(Off) and the visible face image F(Vis) match, the eyeball unit 30 is adapted to transmit an activation signal A to an acceptance unit 34 in the primary cross validation unit 14. However, in the event the output $X_3$ indicates that the office face image F(Off) and the visible face image F(Vis) do not match within the tolerance established by the pre-defined threshold value T of internal consistency checking unit FRB_3, the eyeball unit 30 is adapted in use to display the faces shown in the office face image F(Off) and the visible face image F(Vis) to an operator (not shown); and to allow the operator (not shown) to provide a determination as to whether the faces match. In the event the operator (not shown) overrides the output from the face recognition block FRB_3 and provides the determination that the office face image F(Off) and the visible face image F(Vis) match, the eyeball unit 30 is adapted to transmit an activation signal A to the acceptance unit 34 in the primary cross validation unit 14. In the event the operator (not shown) agrees with the output from the face recognition block FRB_3 and provides the determination that the office face image F(Off) and the visible face image F(Vis) do not match, the eyeball unit 30 is adapted to activate an alert module 32.

The acceptance unit 34 is adapted to receive an activation signal from the face recognition block FRB_3; and on receipt of the activation signal, the acceptance unit 34 is adapted in use to issue a notification to the operator that the candidate client's identity document is deemed to have passed substantially all the cross-validation tests and thus to be substantially fully cross-validated.

*Identity Document Cross-Validation Method*

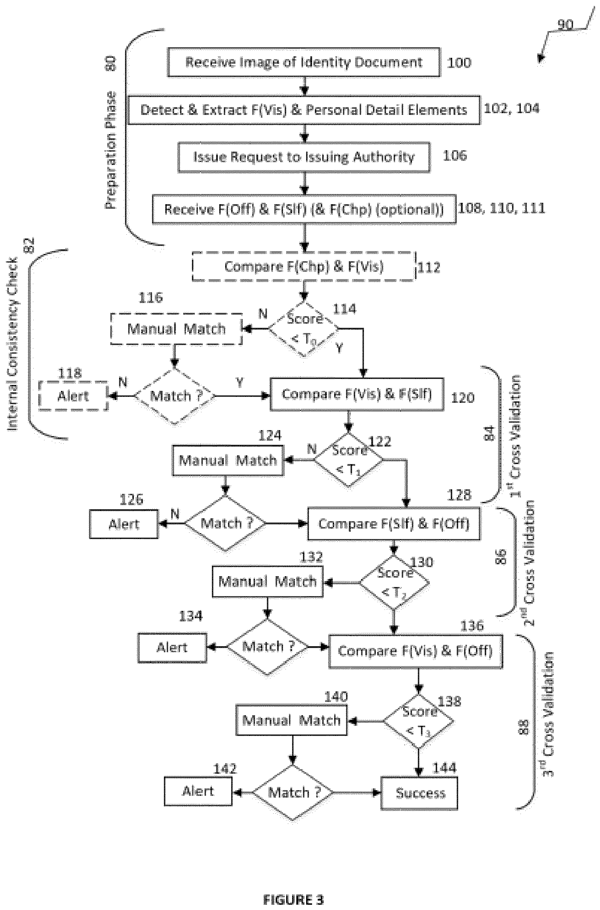

Referring to Figure 3, the identity document cross-validation method 90 comprises a preceding phase (not shown) comprising the steps of:

allowing (not shown) an issuing authority to capture an office face image (F(Off)) of an applicant for an identity document issued by that issuing authority; allowing (not shown) an operator to establish a value for a threshold T for an acceptable degree of matching between images of faces.

The skilled person will understand that the values of the thresholds in each face recognition block (FRB_0, FRB_1, FRB_2 and FRB_3) may or may not be the same as each other. Thus, the step allowing (not shown) an operator to establish a value for a threshold T for an acceptable degree of matching between images of faces may comprise the steps of

(a) allowing (not shown) an operator to establish a value for a threshold To for an acceptable degree of matching between the chip face image F(Chp) and the visible face image F(Vis);
(b) allowing (not shown) an operator to establish a value for a threshold $T_1$ for an acceptable degree of matching between the visible face image F(Vis) and the selfie face image F(Slf));
(c) allowing (not shown) an operator to establish a value for a threshold $T_2$ for an acceptable degree of matching between the selfie face image F(Slf) and the office face image F(Off); and
(d) allowing (not shown) an operator to establish a value for a threshold $T_3$ for an acceptable degree of matching between the visible face image F(Vis) and the office face image F(Off).

Following the preceding phase, the method comprises a preparatory phase 80 which comprises a first step of receiving 100 a captured image of a presented identity document. Optionally, the method may also comprise a preceding step of capturing (not shown) the image of the identity document. The method comprises a next step of detecting and extracting 102 the visible face image F(Vis) from the captured image of the identity document.

Thereafter, the method comprises a next step of applying (not shown) optical character recognition (OCR) to the captured image of the identity document and extracting 104 data therefrom including but not limited to (a) personal detail elements of the identity document holder; (b) the registration number of the identity document number; and (c) the identity of the issuing authority of the identity document. The method comprises a next step of transmitting (not shown) the or each of the extracted identity document number and the personal detail elements of the identity document holder to the issuing authority of the identity document; and issuing 106 a request to the issuing authority for a the office face image F(Off) of the identity document holder captured by the issuing authority when the identity document holder applied for the identity document. The method comprises a next step of receiving 108 the office face image F(Off) of the identity document holder from the issuing authority of the identity document.

The method comprises a further step of receiving 110 a selfie face image F(Slf) of a candidate client. The person skilled in the art will understand that the step of receiving 110 the selfie face image F(Slf) may be conducted in parallel or in sequence with the steps of issuing 106 the request to the issuing authority and receiving 108 the office face image F(Off). Optionally, the method may also comprise a next step of interrogating (not shown) a biochip (if present) in the identity document (i.e. if the identity document is an e-ID); and retrieving 111 from the biochip the chip face image F(Chp) of the identity document holder.

Thereafter, the method comprises an optional internal consistency testing phase 82 wherein the consistency of the data contained within the presented identity document is checked by comparing the data visibly displayed in an identity document against the data contained in the biochip (if present) in the identity document. The internal consistency testing phase 82 comprises a first step of comparing 112 the chip face image F(Chp) and the visible face image F(Vis) by processing (not shown) the chip face image F(Chp) and the visible face image F(Vis) with a plurality of face recognition algorithms (as discussed in the description of the identity document cross validation system) to calculate (not shown) an accumulated score (as discussed in the description of the identity document cross validation system) representing the degree of matching of the chip face image F(Chp) and the visible face image F(Vis). The method comprises the next step of comparing 114 the accumulated score with the predefined value of the threshold To.

If the accumulated score is less than the threshold value $T_0$, the identity document is deemed to be suspect. However, the failure of the automated method to match the chip face image F(Chp) and the visible face image F(Vis) may be the result of a variety of factors external to the depicted faces themselves e.g. chocolate on the ID document, wear and tear etc, which would alter the F(Vis) image. Thus, in the interests of improving the robustness of the cross-validation test, the method comprises the further step of submitting 116 the chip face image F(Chp) and the visible face image F(Vis) for manual checking by the operator. To this end, the method comprises the steps of displaying (not shown) the chip face image F(Chp) and the visible face image F(Vis) side by side to the operator and allowing (not shown) the operator to provide a determination as to whether the chip face image F(Chp) and the visible face image F(Vis) match. In the event the operator provides a determination that the chip face image F(Chp) and the visible face image F(Vis) do not match, the method comprises the further step of allowing 118 the operator to formulate a response in accordance with the operator's internal fraud policy.

If the accumulated score exceeds the threshold value To or the operator provides a determination that the chip face image F(Chp) and the visible face image F(Vis) match, the method proceeds to a first cross-validation phase 84. The person skilled in the art will understand that in the event the presented identity document does not contain a biochip (i.e. presented identity document is not an e-ID) then this optional internal consistency testing phase 82 cannot be performed, in which case the method will proceed directly from the preparatory phase 80 to the first cross-validation phase 84.

The first cross-validation phase 84 comprises the steps of comparing 120 the visible face image F(Vis) and the selfie face image F(Slf) by processing (not shown) the visible face image F(Vis) and the selfie face image F(Slf) with a plurality of face recognition algorithms (as discussed in the description of the identity document cross validation system) to calculate (not shown) an accumulated score (as discussed in the description of the identity document cross validation system) representing the degree of matching of the visible face image F(Vis) and the selfie face image F(Slf).

The method comprises the next step of comparing 122 the accumulated score with the predefined value of the threshold $T_1$. If the accumulated score is less than the threshold value $T_1$, the identity document is deemed to be suspect. However, the failure of the automated method to match the visible face image F(Vis) and the selfie face image F(Slf) may be the result of a variety of factors external to the depicted faces themselves e.g. chocolate on the ID document, wear and tear etc, which would alter the F(Vis) image. Thus, in the interests of improving the robustness of the cross-validation test, the method comprises the further step of submitting 124 the visible face image F(Vis) and the selfie face image F(Slf) for manual checking by the operator. To this end, the method comprises the steps of displaying (not shown) the visible face image F(Vis) and the selfie face image F(Slf) side by side to the operator and allowing (not shown) the operator to provide a determination as to whether the visible face image F(Vis) and the selfie face image F(Slf) match. In the event the operator provides a determination that the visible face image F(Vis) and the selfie face image F(Slf) do not match, the method comprises the further step of allowing 126 the operator to formulate a response in accordance with the operator's internal fraud policy.

If the accumulated score exceeds the threshold value $T_1$ or the operator provides a determination that the visible face image F(Vis) and the selfie face image F(Slf) match, the method proceeds to a second cross-validation phase 86. The second cross-validation phase 86 comprises the steps of comparing 128 the selfie face image F(Slf) and the office face image F(Off) by processing (not shown) the selfie face image F(Slf) and the office face image F(Off) with a plurality of face recognition algorithms (as discussed in the description of the identity document cross validation system) to calculate (not shown) an accumulated score (as discussed in the description of the identity document cross validation system) representing the degree of matching of the selfie face image F(Slf) and the office face image F(Off).

The method comprises the next step of comparing 130 the accumulated score with the predefined value of the threshold $T_2$. If the accumulated score is less than the threshold value $T_2$, the identity document is deemed to be suspect. In the interests of improving the robustness of the cross-validation test, the method comprises the further step of submitting 132 the selfie face image F(Slf) and the office face image F(Off) for manual checking by the operator. To this end, the method comprises the steps of displaying (not shown) the selfie face image F(Slf) and the office face image F(Off) side by side to the operator and allowing (not shown) the operator to provide a determination as to whether the selfie face image F(Slf) and the office face image F(Off) match. In the event the operator provides a determination that the selfie face image F(Slf) and the office face image F(Off) do not match, the method comprises the further step of allowing 134 the operator to formulate a response in accordance with the operator's internal fraud policy.

If the accumulated score exceeds the threshold value $T_2$ or the operator provides a determination that the selfie face image F(Slf) and the office face image F(Off) match, the method proceeds to a third cross-validation phase 88. The third cross-validation phase 88 comprises the steps of comparing 136 the visible face image F(Vis) and the office face image F(Off) by processing (not shown) the visible face image F(Vis) and the office face image F(Off) with a plurality of face recognition algorithms (as discussed in the description of the identity document cross validation system) to calculate (not shown) an accumulated score (as discussed in the description of the identity document cross validation system) representing the degree of matching of the visible face image F(Vis) and the office face image F(Off).

The method comprises the next step of comparing 138 the accumulated score with the predefined value of the threshold $T_3$. If the accumulated score is less than the threshold value $T_3$, the identity document is deemed to be suspect. However, the failure of the automated method to match the visible face image F(Vis) and the office face image F(Off) may be the result of a variety of factors external to the depicted faces themselves e.g. chocolate on the ID document, wear and tear etc, which would alter the F(Vis) image. Thus, in the interests of improving the robustness of the cross-validation test, the method comprises the further step of submitting 140 visible face image F(Vis) and the office face image F(Off) for manual checking by the operator. To this end, the method comprises the steps of displaying (not shown) the visible face image F(Vis) and the office face image F(Off) side by side to the operator and allowing (not shown) the operator to provide a determination as to whether the visible face image F(Vis) and the office face image F(Off) match. In the event the operator provides a determination that the visible face image F(Vis) and the office face image F(Off) do not match, the method comprises the further step of allowing 142 the operator to formulate a response in accordance with the operator's internal fraud policy. If the accumulated score exceeds the threshold value $T_3$ or the operator provides a determination that the visible face image F(Vis) and the office face image F(Off) match, the identity document is deemed 144 to have successfully passed the cross-validation tests.

Modifications and alterations may be made to the above invention without departing from the scope of the invention.

**Claims**

1. A method of validating an identity document issued by an issuing authority to certify the identity of an identity document holder whose details are displayed by the identity document together with a first image of the identity document holder, wherein the method comprises the steps of

allowing the issuing authority 10 to capture a second image of the identity document holder substantially at the same time as the identity document holder applied for the identity document;
allowing an operator to define a value of a threshold for assessing the similarity of a pair of images;

receiving (100) an image of the identity document;

processing (102, 104) the image of the identity document to extract therefrom the first image and details of the identity document holder and the issuing authority;

using the extracted details of the identity document holder or an identification number of the identity document to retrieve (108) from the issuing authority the second image of the identity document holder;

receiving (110) from a candidate client a third image comprising an image of themselves

organising the first image, second image and third image into a plurality of pairs;

calculating for each pair a measure of the similarity of the images contained therein

deeming the identity document validated in the event each measure of similarity for each pair exceeds the value of the threshold

**characterised in that** the step of calculating for each pair a measure of the similarity of the images contained therein comprises the step of applying a plurality of face recognition algorithms to each image in the pair and calculating an accumulated score therefrom representing the degree of matching between the faces of the persons displayed in each image.

2. The method as claimed in Claim 1 wherein

the step of processing (102, 104) the image of the identity document to extract therefrom the first image and details of the identity document holder and the issuing authority comprises the step of interrogating a biochip, if present, in the identity document; and retrieving (111) from the biochip a fourth image of the identity document holder; and

the step of organising the first image, second image and third image into a plurality of pairs comprises the step of organising the first image, second image, third image and fourth images into a plurality of pairs.

3. The method as claimed in Claim 1 or Claim 2 wherein the step of deeming the identity document validated in the event each measure of similarity for each pair exceeds the value of the threshold is followed by the step of submitting for manual inspection the images in a pair, in the event the measure of similarity for the pair is less than the value of the threshold.

4. The method of Claim 3 wherein

the step of submitting for manual inspection the images in a pair, in the event the measure of similarity for the pair is less than the value of the threshold comprises the step of displaying together to an operator the faces of the person displayed in each image of the pair; and allowing the operator to provide a determination as to whether the faces match; and

the step of deeming the identity document validated in the event each measure of similarity for each pair exceeds the value of the threshold comprises the step of deeming the identity document validated in the event each measure of similarity for each pair exceeds the value of the threshold or the faces displayed in the pairs submitted for manual inspection are determined by the operator to be matching.

5. The method of any one of the preceding claims wherein the step of applying a plurality of face recognition algorithms to each image in the pair and calculating an accumulated score therefrom representing the degree of matching between the faces of the persons displayed in each image comprises the steps of

applying the face recognition algorithms to each image in the pair to generate a plurality of outputs of the face recognition algorithms;

applying differential weights to the outputs of the face recognition algorithms to create a plurality of weighted outputs of the face recognition algorithms;

normalising the weighted outputs of the face recognition algorithms to create a plurality of normalised weighted outputs; and

calculating the sum of the normalised weighted outputs to generate the accumulated score.

6. An identity document validation system 5 adapted to validate an identity document issued by an issuing authority to certify the identity of an identity document holder whose details are displayed by the identity document together with a first image of the identity document holder, wherein the identity document validation system 5 comprises

an identity document processing unit 12 adapted in use to receive a captured image of the identity document and extract therefrom the image, the first image and the details of the identity document holder and the issuing authority;

a primary cross validation unit 14 coupled with the identity document processing unit 12 to receive therefrom the first image, and is adapted in use to receive from the issuing authority 10, a second image of the identity document holder captured by the issuing authority 10 substantially at the same time as the identity document holder applied for the identity document; and from a candidate client 7, a third image comprising an image of themselves;

wherein the primary cross validation unit 14 comprises a plurality of face recognition engine blocks FRB_1, FRB_2 and FRB_3 which are adapted in use to organise the first image, second image and third image into a plurality of pairs; and calculate for each pair a measure of the similarity of the images contained therein; and the primary cross validation unit 14 is further adapted in use to deem the identity document validated in the event each measure of similarity for each pair exceeds the value of the threshold **characterised in that** each face recognition engine block FRB_1, FRB_2 and FRB_3 comprises a plurality of face recognition engines $E_1$, $E_2$... $E_n$ adapted in use to be applied to each image in a pair and calculate an accumulated score therefrom representing the degree of matching between the faces of the persons displayed in each image.

7. The system of Claim 6 wherein the identity document processing unit 12 further comprises a

an biochip interrogation unit interface coupled with an internal consistency checking unit 16, wherein the biochip interrogation unit interface is adapted in use permit the transmission to the internal consistency checking unit 16, of a fourth image of the identity document holder retrieved from a biochip if present in the identity document, and

wherein the internal consistency checking unit 16 comprises a plurality of face recognition engines $E_1$, $E_2$... $E_n$ , adapted in use to be applied to first image and the fourth image and calculate an accumulated score representing the degree of matching between the faces of the persons displayed in each image; and wherein the internal consistency checking unit 16 is further coupled with the primary cross validation unit 14 and is adapted in use to deactivate the primary cross validation unit 14 in the event the accumulated score is less than the threshold.

8. The system of Claim 7 wherein the internal consistency checking unit 16 is coupled with an eyeball unit 24 adapted in use to display to an operator the faces of the persons displayed in the first image and the fourth images; and to allow the operator to provide a determination as to whether the faces match; wherein the eyeball unit 24 is coupled with the primary cross validation unit 14 and is adapted in use to deactivate the primary cross validation unit 14 in the event the operator provides the determination that the faces do not match.

9. The system of any one of Claims 6 to 8 wherein the primary cross validation unit 14 comprises a plurality of eyeball units 26, 28, 30 coupled with the face recognition blocks FRB_1, FRB_2, FRB_3 which are adapted in use to submit for manual inspection the images in a pair, in the event the measure of similarity for the pair is less than the value of the threshold.

10. The system of Claim 9 wherein each eyeball unit 26, 28, 30 is adapted in use to display to an operator the face of the person displayed in the first image and the faces of the persons displayed in the pair; and to allow the operator to provide a determination as to whether the faces match; and the primary cross validation unit 14 is further adapted is use to deem the identity document validated in the event each measure of similarity for each pair exceeds the value of the threshold or the operator provides a determination that the faces displayed in the pairs submitted for manual inspection match.

11. The system of any one of Claims 6 to 11 wherein the face recognition blocks FRB_1, FRB_2, FRB_3 each comprise a plurality of face recognition engines $E_1$, $E_2$... $E_n$ , adapted in use to be applied to each image in the pairs into which the first image, second image and third image are organised; and a plurality of weighting units coupled to the face recognition engines $E_1$, $E_2$... $E_n$ to apply differential weights to the outputs therefrom; wherein the weighting units are coupled with a summing unit to adapted in use to normalise the weighted outputs from the face recognition engines $E_1$, $E_2$... $E_n$ and to calculate a sum thereof to generate the accumulated score.

12. An identity document validation computer program, tangibly embodied on a computer readable medium, the computer program product including instructions for causing a computer to execute the identity document validation method as claimed in Claim 1.

FIGURE 1

FIGURE 3

Europäisches
Patentamt

European
Patent Office

Office européen
des brevets

# EUROPEAN SEARCH REPORT

Application Number

EP 19 18 8891

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 2003/099379 A1 (MONK BRUCE C [US] ET AL) 29 May 2003 (2003-05-29)<br>* abstract *<br>* paragraph [0009] - paragraph [0019] *<br>* paragraph [0027] *<br>* paragraph [0049] - paragraph [0050] *<br>* paragraph [0062] - paragraph [0072] *<br>* figure 4 * | 1-12 | INV.<br>G06K9/00 |

-----

TECHNICAL FIELDS
SEARCHED (IPC)

G06K

The present search report has been drawn up for all claims

| Place of search | Date of completion of the search | Examiner |
|---|---|---|
| The Hague | 25 November 2019 | Koutroumpas, K |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 18 8891

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2019

| Patent document cited in search report | Publication date | Patent family member(s) | Publication date |
|---|---|---|---|
| US 2003099379 A1 | 29-05-2003 | AU 2002365578 A1 | 10-06-2003 |
| | | CA 2467861 A1 | 05-06-2003 |
| | | CN 1592914 A | 09-03-2005 |
| | | EP 1449155 A1 | 25-08-2004 |
| | | US 2003099379 A1 | 29-05-2003 |
| | | US 2004239732 A1 | 02-12-2004 |
| | | US 2005229010 A1 | 13-10-2005 |
| | | WO 03046815 A1 | 05-06-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8322605 B
- US 7110573 B